# EUROPEAN PATENT SPECIFICATION

(11) **EP 4 143 564 B1**
(45) Date of publication and mention of the grant of the patent: **05.06.2024**
(21) Application number: 21720515.2
(22) Date of filing: 26.04.2021
(51) Int. Cl.: G01N 30/88, G01N 30/72

(54) **METHOD FOR IDENTIFICATION AND QUANTIFICATION OF POLYSACCHARIDES IN COMPLEX GLYCOCONJUGATE COMPOSITIONS**
VERFAHREN ZUR IDENTIFIZIERUNG UND QUANTIFIZIERUNG VON POLYSACCHARIDEN IN KOMPLEXEN GLYCOKONJUGATZUSAMMENSETZUNGEN
PROCÉDÉ D'IDENTIFICATION ET DE QUANTIFICATION DE POLYSACCHARIDES DANS DES COMPOSITIONS DE GLYCOCONJUGUÉS COMPLEXES

(30) Priority: 28.04.2020 EP 20171823; 28.01.2021 EP 21154080
(43) Date of publication of application: 08.03.2023
(73) Proprietor: Janssen Pharmaceuticals, Inc., Titusville, NJ 08560 (US)
(72) Inventor: FLÜTSCH, Andreas, 3018 Bern (CH); AL-KAABI, Ali, 3018 Bern (CH)
(74) Representative: J A Kemp LLP
(86) International application number: PCT/EP2021/060797
(87) International publication number: WO 2021/219530

(56) References cited:
- US-A1- 2020 041 470
- BEGOÑA ECHEVERRIA ET AL: "Chemo-Enzymatic Synthesis of 13 C Labeled Complex N-Glycans As Internal Standards for the Absolute Glycan Quantification by Mass Spectrometry", ANALYTICAL CHEMISTRY, vol. 87, no. 22, 28 October 2015 (2015-10-28), pages 11460-11467, XP055731302, ISSN: 0003-2700, DOI: 10.1021/acs.analchem.5b03135
- HEE-JIN JEONG ET AL: "High-Throughput Quantitative Analysis of Total N -Glycans by Matrix-Assisted Laser Desorption/Ionization Time-of-Flight Mass Spectrometry", ANALYTICAL CHEMISTRY, vol. 84, no. 7, 3 April 2012 (2012-04-03), pages 3453-3460, XP055033784, ISSN: 0003-2700, DOI: 10.1021/ac203440c
- IVANCIC M M ET AL: "LC/MS analysis of complex multiglycosylated human alpha1-acid glycoprotein as a model for developing identification and quantitation methods for intact glycopeptide analysis", ANALYTICAL BIOCHEMISTRY, ACADEMIC PRESS, AMSTERDAM, NL, vol. 400, no. 1, 1 May 2010 (2010-05-01), pages 25-32, XP026940226, ISSN: 0003-2697, DOI: 10.1016/J.AB.2010.01.026 [retrieved on 2010-01-25] cited in the application
- ZHU ZHIKAI ET AL: "Absolute Quantitation of Glycosylation Site Occupancy Using Isotopically Labeled Standards and LC-MS", JOURNAL OF THE AMERICAN SOCIETY FOR MASS SPECTROMETRY, ELSEVIER SCIENCE INC, US, vol. 25, no. 6, 27 March 2014 (2014-03-27) , pages 1012-1017, XP035315802, ISSN: 1044-0305, DOI: 10.1007/S13361-014-0859-2 [retrieved on 2014-03-27]

## Description

The present invention relates to analytical methods for identifying and quantifying complex glycoconjugate compositions, particularly to the analysis of a polysaccharide component of a glycoprotein in a sample. The invention further relates to the use of liquid chromatography - mass spectrometry systems ("LC-MS systems") in such analytical methods, particularly to the use of LC-MS systems for in-process control during glycoconjugate manufacturing, for release control of produced glycoconjugates, for stability control of stored glycoconjugates and for process - optimization of glycoconjugate manufacturing.

There is an increased pressure of regulatory authorities on biopharmaceutical manufacturers to demonstrate satisfactory programs for understanding, measuring, and controlling glycosylation in glycoprotein-based drugs. However, the analysis of complex glycoconjugate compositions, i.e. identification and absolute quantification thereof, is a challenging task. Such analysis typically comprises a number of assays and requires for full analysis under GMP conditions 1 week or even longer.

For glycoprotein-based drugs, the state-of-the art chemical assays are performed on high-performance liquid chromatography systems (HPLC systems) equipped with different detectors: For determination of total and free polysaccharides (PS), a pulsed amperometric detector is used which requires laborious sample preparation by hydrolyzing the sugar chains and detecting the released monosaccharides after ion chromatography separation. As stated by ThermoFisher Scientific, a manufacturer of such HPLC systems, "Carbohydrates are difficult to analyze using common chromatography and detection method" but their "electrochemical detection has been optimized for carbohydrate analysis" (1). Conclusively, amperometric detection and quantification may be considered the gold standard in carbohydrate quantification. However, one of the technique's main disadvantage (required monosaccharides) makes sample preparations of glycoprotein-based drugs laborious and release assays time- and cost-intensive.

Additionally, all glycoprotein-based drugs undergo further analytical release testing (e.g. free glycans in the drug substances, glycan modifications) besides the general release arsenal for purity and identity requested by regulatory authorities. These multiple different release criteria result in long release times for glycoprotein-based drugs.

Mazsaroff et al. (2) describe analysis of carbohydrate structures of glycoproteins using LC-MS systems and In-Source fragmentation. The document describes an analytical method for relative quantification by determining the ratio of two peaks. As explicitly stated by the authors, it is "important to understand that the fragment ion peak area ratio at optimum conditions for signal-to-noise ratio might not reflect the absolute ratio of the fragment ions present in the glycoprotein molecule investigated, but the optimum conditions yield the best measure for relative quantification of fragment ion ratio in the comparison of the different batches of a biopharmaceutical product to its standard." Conclusively, the document fails to describe any absolute quantification of carbohydrate structures; nor does it suggest the use of a reference material calibration curve.

Ivancic et al. (3) describe the LC-MS analysis of complex multiglycosylated human a1-acid glycoprotein as a model for developing identification and quantification methods for intact glycopeptide analysis. The document describes an analytical method where in-source fragmentation is used to fragment carbohydrates, which are used as markers to identify glycopeptides. The technique ultimately aims to quantify the "degree of glycosylation" of a peptide in the AAG-protein. This means the comparison of peak intensities of peptides identified to be glycosylated to peak intensities of non-glycosylated peptides. Again, the document fails to describe any absolute quantification of carbohydrate structures; nor does it suggest the use of a reference material calibration curve.

Carell et al. (US 2020/041470) (4) discloses a derivatisation reagent for polysaccharides as a component of glycoproteins. The use of this derivatisation reagent and isotopologues thereof in combination with a calibration curve that is generated from a reference material enables the absolute quantification of such polysaccharides by LC-MS systems that are capable of fragmenting selected ions by collision-induced dissociation (CID). As derivatisation of the analyte is a pre-requisite for quantification, the document fails to describe any LC-MS method wherein the glycoprotein is in its native state. Such derivatisation of the polysaccharide component requires the addition of a sample preparation step in comparison to a method that analyzes a glycoprotein in its native state, and thus renders such methods inevitably more cumbersome. Furthermore, the method requires the use of a sophisticated LC-MS system in which specific ions resulting from the in-source fragmentation can be selected and further fragmented by CID. Such sophisticated equipment is not only more expensive per se but also validation of a corresponding analysis method is more time-consuming than methods without such requirements. The use of a relatively simple LC-MS system and a protocol that requires a minimum of handling steps is thus regarded beneficial, particularly in the context of a drug release assay.

Echeverria et al. (5) describe an MS method for quantifying glycans which are part of a monoclonal antibody. Absolute quantification of the polysaccharides is achieved after cleavage from the antibody by incubation with the enzyme PNGase F. For quantification, a mix of isotopically labelled glycans is added to the sample as an internal standard and analysis is performed by matrix-assisted laser desorption/ionization - time of flight (MALDI-TOF) MS. Again, this document fails to describe any analysis method for glycoproteins wherein the glycoprotein is in its native state. Further, the method does not use liquid chromatography to separate the glycoproteins within the sample prior to MS analysis but merely suggests the possibility of applying the reported mix of isotopically labelled glycan standards to LC-MS based methods. As discussed above, addition of a sample preparation step, e.g. PNGase F mediated release of the PS component from the carrier protein, renders the analysis method more cumbersome and thus reduces the throughput in comparison to a method that does not involve such a step. Furthermore, PNGase F digestion is not applicable to all polysaccharide structures, thus limiting the method of the prior art to glycoproteins that are within the substrate specificity of PNGase F.

Similarly, Jeong et al. (6) describe a MALDI-TOF MS method for the absolute quantification of glycans after their PNGase F mediated release from a glycoprotein, followed by permethylation of the glycans. Hence, this document also does not describe a quantification method for glycoproteins wherein the glycoprotein is in its native state. The described method also does not include LC-based separation of the glycoproteins prior to MS analysis. As outlined above, addition of a sample preparation step renders the analysis method more cumbersome and reduces the throughput. In this particular case, sample preparation does not only involve PNGase F digestion (thereby inherently putting a limitation on the method) but also includes a permethylation step, thus further complicating sample preparation.

In consequence, there is a need for improved analytical methods for glycoconjugates, particularly glycoprotein-based drugs.

Thus, it is an object of the present invention to mitigate at least some of these drawbacks of the state of the art.

In particular, it is an aim of the present invention to provide analytical methods which bypass the sample preparation thereby increasing the analytical throughput, and also decreasing release costs, for glycoprotein-based drugs.

Further, it is an aim of the present invention to provide analytical methods combining multiple different release criteria in one assay thereby further reducing batch release time of glycoprotein-based drugs.

In particular, it is an aim of the present invention to provide analytical methods that simultaneously provide information on identity and absolute quantity of glycoprotein-based drugs.

One or more of the above objectives are achieved by an analytical method as defined in the invention according to claim 1 and according the use of LC-MS systems as defined in claim 12.

The present invention will be described in more detail below. It is understood that the various embodiments, preferences and ranges as provided / disclosed in this specification may be combined at will. Further, depending of the specific embodiment, selected definitions, embodiments or ranges may not apply.

Unless otherwise stated, the following **definitions** shall apply in this specification:
As used herein, the term "a", "an", "the" and similar terms used in the context of the present invention (especially in the context of the claims) are to be construed to cover both the singular and plural unless otherwise indicated herein or clearly contradicted by the context.

As used herein, the terms "including", "containing" and "comprising" are used herein in their open, non-limiting sense. It is understood that the various embodiments, preferences and ranges may be combined at will.

Throughout this specification a number of abbreviations are used, including:

| | |
|---|---|
| AUC | Area Under the Curve |
| CID | collision induced dissociation, an MS technique |
| EPA | detoxified Exotoxin A of *P. aeruginosa* |
| ETD | electron transfer dissociation, an MS technique |
| HPLC | high performance liquid chromatography, |
| IC-PAD | Ion Chromatography-Pulsed Amperometric Detection |
| ISF | In-Source fragmentation |
| LC | liquid chromatography |
| LPS | lipopolysaccharide |
| MS | mass spectrometry |
| PS | Polysaccharide |
| RP | Reverse Phase |
| SEC | Size Exclusion Chromatography |
| TIC | Total Ion Current, an MS technique |

The above abbreviations, and further abbreviations mentioned in the specification, are common in the field.

The term **"glycoconjugate"** is known in the field and particularly describes chemical entities covalently bound to one or more polysaccharide(s). Such glycoconjugate may be obtained by biological conjugation in a living cell ("bioconjugate" or "biological conjugate") or may be obtained by chemical conjugation of a polysaccharide ("chemical" or "synthetic" glycoconjugate). Suitable chemical entities include proteins/peptides and lipids, the corresponding glycoconjugates being **glycoproteins,** (including proteoglycans, peptidoglycans and glycopeptides) and **glycolipids.**

The term glycoprotein includes "traditional glycoproteins" and "glycoconjugate vaccines". In traditional glycoproteins, the emphasis is on the protein part, such as for instance for antibodies or erythropoietin where the 'active' principle is more residing in the protein part, and the glycans play a role for instance in half-life or defining other properties. Such traditional glycoproteins find widespread use in pharmaceutical applications. In glycoconjugate vaccines, the emphasis is on the glycan part, to which an immune response is desired because the glycans are the relevant antigens, and the protein part merely serves as a carrier to lead to a desired T-cell memory immune response.

The term glycoprotein further includes "proteoglycans" and "peptidoglycans" and "glycopeptides". The term "proteoglycans" refers to proteins that are heavily glycosylated. The basic proteoglycan unit consists of a core protein with one or more covalently attached glycosaminoglycan (GAG) chain(s). The point of attachment is a serine (Ser) residue to which the glycosaminoglycan is joined through a tetrasaccharide bridge. The term "peptidoglycan" refers to a polymer consisting of saccharides and amino acids that form a mesh-like layer outside the plasma membrane of most bacteria, forming the cell wall. The term "glycopeptide" refers to a glycoprotein comprising up to 50 amino acids in the protein part. Such glycopeptide being available e.g. via digestion of a larger glycoprotein (e.g. via trypsin digestion), bacterial fermentation or chemical synthesis.

The term **"glycolipids"** is known in the field and particularly describes entities where one or more saccharide(s) are linked by a glycosidic (covalent) bond to a lipid. Consequently, the characterizing feature of a glycolipid is the presence of a saccharide (particularly a polysaccharide as discussed herein) bound to a lipid moiety.

The term **"polysaccharide"** is known in the field and particularly describes polymeric carbohydrates composed of monosaccharide units bound together by glycosidic linkages, either linear or branched. Such polysaccharides are characterized by their repeating units, each repeating unit described with their respective monosaccharide composition. Said repeating units include one or more monosaccharides which can also be chemically modified (e.g. amidated, sulphonated, acetylated, phosphorylated, etc). Typically found monosaccharides in said repeating units are cyclic or linear monosaccharides containing three to seven carbon atoms. In the specific case of glycoconjugate vaccines, the conjugated polysaccharide originates from a pathogenic species (e.g. *Escherichia coli*) with said repeating unit defined by the genetics of the specific pathogen. The repeating unit can thus be a specific marker / identifier of the pathogen.

The term "polysaccharide component" consequently denotes one or more glycan chain(s) of a glycoconjugate. Glycans can be monomers or polymers of sugar residues, but typically contain at least three sugars, and can be linear or branched. A glycan may include natural sugar residues (e.g., glucose, N- acetylglucosamine, N-acetyl neuraminic acid, galactose, mannose, fucose, arabinose, ribose, xylose, etc.) and/or modified sugars (e.g., 2'-fluororibose, 2'-deoxyribose, phosphomannose, 6'-sulfo N-acetylglucosamine, etc). The term "glycan" includes homo- and heteropolymers of sugar residues. The term "glycan" also encompasses a glycan component of a glycoconjugate (e.g., of a glycoprotein, glycopeptide, glycolipid). The term also encompasses free glycans, including glycans that have been cleaved or otherwise released from a glycoconjugate.

The term "O-acetylated polysaccharide", as used herein, refers to polysaccharides where one or more monosaccharides of the repeating unit are chemically modified by acetylation. Said monosaccharides have one or more of their present hydroxyl groups acetylated. For pathogen-derived repeating units used in glycoconjugate vaccines, the O-acetylation of certain monosaccharides can be essential to induce an immune response for said pathogen. Examples of pathogen-derived polysaccharide components are shown in Table 1.

The terms **"glycan"** / "glycan chain" are synonyms of "polysaccharide" as defined below. Correspondingly, in the context of this invention, "glycan" and the prefix "glyco-", also refers to the carbohydrate portion of a glycoconjugate, such as a glycoprotein or a glycolipid.

The term **"serotype"** as used herein, refers to glycoconjugates having different polysaccharide chains which are derived from different bacterial serotypes. Examples of glycans from a number of *E. coli* serotypes are identified below in Table 1.

The term "native state" is known in the field and relates to a biomolecule, such as a glycoconjugate, in its intact and functional state. When referring to native state within the invention, native state means that the glycoconjugate to be analysed is not derivatised or otherwise modified during sample preparation, for example with an enzyme such as PNGase F, or subjected to a chemical reaction. Analysis of a glycoconjugate in its native state thus differs from any method that involves derivatisation of the glycoconjugate or that involves a sample preparation step to release the glycans from the carrier molecule, e.g. a carrier protein, prior to subjecting the sample to the LC-MS step of the analysis. However, when referring to native state within the invention, the term native state does not relate to the conformation of the glycoconjugate, i.e. its three-dimensional fold such as its secondary structure, tertiary structure or quaternary structure. "Analysis of a glycoprotein in its native state" is thus meant to be synonymous with "analysis of a glycoprotein, wherein the glycoprotein is neither subjected to (i) enzymatic digestion with an enzyme that removes the polysaccharide component from the carrier protein nor to (ii) a chemical reaction, e.g. derivatisation, in each case prior to introducing the glycoprotein into the LC-MS system".

The present invention will be better understood by reference to the **figures.**

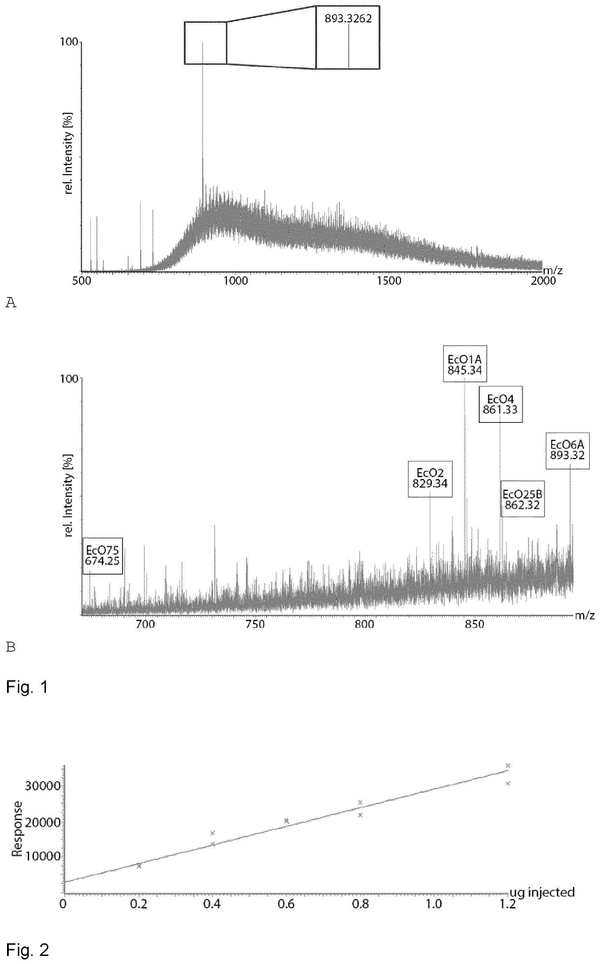

Figure 1: LC-MS spectra combined across the main chromatographic peak (TIC MS function, x-axis m/z; y-axis rel. intensity [%]) of analysed glycoprotein EcO6A (a glycoconjugate vaccine component, comprising polysaccharide from *E. coli* serotype O6A covalently linked to EPA carrier protein; structure for the PS repeating unit is given in Table 1) and a mixture of different glycoproteins EcO75, EcO2, EcO1A, EcO4, EcO25B, and EcO6A (polysaccharides of *E. coli* serotypes 075, O2, O1A, O4, O25B, and O6A, each independently covalently linked to EPA carrier proteins; structures for the repeating units for these polysaccharides are given in Table 1).

Panel A shows in-source fragmentation of *E. coli* serotype EcO6A and release of repeating unit specific fragment (Peak with mass 893.3262 g/mol).

As visible in Panel B, the release of glycan repeating unit as well as the selective assignment thereof is also possible in complex glycoprotein samples, as visible for a 6-valent mix with 6 different serotypes, masses depicted close to the peaks.

Figure 2: An exemplary calibration curve is shown. In-source fragmentation occurs linear based on the amount of injected serotype, here depicted in a proof of concept using glycoprotein EcO6A. Different amount of injected protein (0.2 µg up to 1.2 pg) leads to different signal response for the repeating unit of EcO6A (fragment with molecular mass of 893.32 g/mol; y-Axis response / [a.u.]; x-Axis microgram EcO6A]

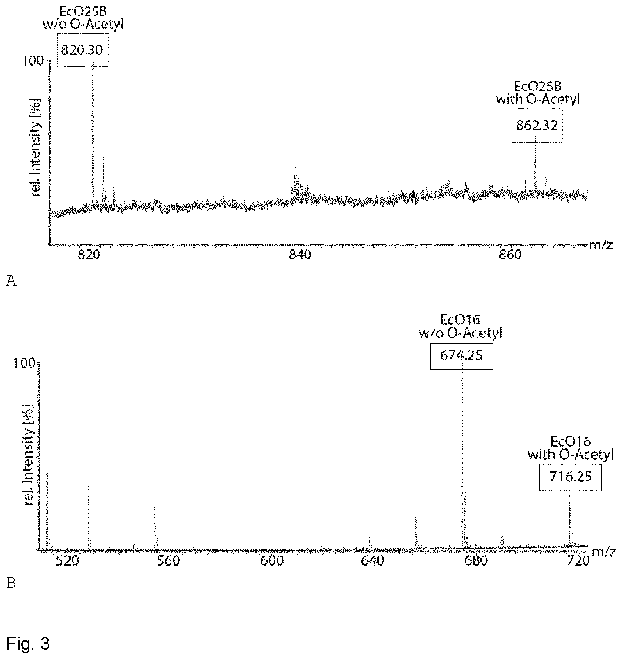

Figure 3: LC-MS spectra combined across the main chromatographic peak (TIC MS function, x-axis m/z; y-axis rel. intensity [%]) of glycoprotein EcO25B and EcO16 (with / without acetylation). The structures of the repeating units with O-acetyl for the respective *E. coli* O25B and 016 serotypes are given in Table 1.

Panel A shows in-source fragmentation of glycoprotein EcO25B with two distinct peaks: Repeating units with (862 g/mol) and without O-Acetyl (820 g/mol).

Panel B shows the same effect for glycoprotein EcO16 with two distinct peaks with masses 716 g/mol and 674 g/mol for repeating units with and without O-acetyl.

In more general terms, in a **first aspect,** the invention relates to a method for analysing a polysaccharide component (a glycan) of a glycoconjugate in a sample. It is important to note that such analysis refers to both, the identification of said polysaccharide component, and the absolute quantification of said polysaccharide component. The inventive method comprises the steps of (a) establishing a calibration curve of said polysaccharide component by means of an LC-MS system; (b) measuring the sample on the same LC-MS system; (c) comparing the results of (a) and (b) to thereby analyse said polysaccharide component in said sample. In an advantageous embodiment, the glycoconjugate is a glycoprotein.

In a preferred embodiment, the glycoconjugate, preferably a glycoprotein, is in its native state. Hence, as no enzymatic release, e.g. PNGase F mediated release, of the PS component from the carrier protein is required, the method is also applicable to the analysis of glycoconjugates that are not susceptible to such enzymatic cleavage, e.g. glycoconjugates comprising sugar motifs that are not within the substrate specificity of PNGase F such as sugar motifs comprising N-acetylglucosamine (GlcNAc) linked to an alpha 1,3-fucose. As outlined in further detail below, the inventive method provides information on at least two and preferably more, most preferably all, of
(i) identity of polysaccharides in,
(ii) absolute quantity of polysaccharide bound to another chemical entity of the glycoconjugate, such as protein, in,
(iii) quantity of free polysaccharide in,
(iv) quantity and identity of modifications such as acetylation in bound and free polysaccharide in, and
(v) purity of, samples containing glycoconjugates, particularly glycoprotein-based pharmaceutical compositions. This aspect of the invention, particularly the process steps and terms used, shall be explained in further detail below:

**Glycoconjugate:** The term is discussed above. The inventive method is broadly applicable and may be used for analyzing glycoproteins (including proteoglycans, peptidoglycans and glycopeptides) and glycolipids.

**Glycoprotein:** The term is discussed above. Specifically it relates to a conjugation product wherein a polysaccharide (i.e. a glycan) is covalently coupled to a carrier protein. The conjugate can be a bioconjugate, which is a conjugation product prepared in a host cell, wherein the host cell machinery produces the glycan and the protein and links the glycan to the carrier protein, e.g., via N-links of asparagine or arginine. The conjugate can also be prepared by chemical linkage of the protein and glycan chain, e.g. via thiol alkylation. The inventive method is applicable to all types of conjugation. Without being bound to theory, it is believed it is not relevant how the sugar is attached, as long as it is fragmented in-source by the MS. Whether or not fragmentation does occur at the protein-glycan-interface, this is not relevant, as the reference material will show the same fragmentation.

Particularly useful glycoconjugates include carrier proteins to which one or more polysaccharides are attached. Such glycoconjugates are for instance used as the active components of certain vaccines, which aim at inducing functional immune responses against the polysaccharides of the glycoconjugates. In embodiments of the invention, said glycoprotein comprises one carrier protein and one or more polysaccharides covalently bond to said carrier protein, preferably 1 to 4 polysaccharides covalently bound to said carrier protein. In embodiments of the invention, the glycoprotein is a conjugation product containing an *E. coli* O-antigen covalently bound to a carrier protein. The term O-antigen is known in the field and used in its normal context, it is not to be confused with O-linked. The term O-antigen generally refers to a repetitive glycan polymer contained within an LPS of a bacteria, such as *E. coli.* The O-antigen of *E. coli* is a polymer of immunogenic repeating oligosaccharides (typically 1-40 repeating units) and typically used for serotyping and glycoconjugate vaccine production.

**Carrier Protein:** In embodiments of the invention, the carrier protein is selected from the group consisting of detoxified Exotoxin A of *P. aeruginosa* (EPA), *E. coli* flagellin (FliC), CRM197, maltose binding protein (MBP), Diphtheria toxoid, Tetanus toxoid, detoxified hemolysin A of *S. aureus,* clumping factor A, clumping factor B, E. *coli* heat labile enterotoxin, detoxified variants of E. *coli* heat labile enterotoxin, Cholera toxin B subunit (CTB), cholera toxin, detoxified variants of cholera toxin, *E. coli* Sat protein, the passenger domain of E. *coli* Sat protein, *Streptococcus pneumoniae* Pneumolysin, Keyhole limpet hemocyanin (KLH), *P. aeruginosa* PcrV, outer membrane protein of *Neisseria meningitidis* (OMPC), and protein D from non-typeable *Haemophilus influenzae.* In a particular embodiment, the carrier protein is a detoxified exotoxin A of *Pseudomonas aeruginosa* (EPA). In such embodiments, the EPA preferably comprises 1 to 20, preferably 1 to 10, preferably 2 to 4, glycosylation sites.

In a particular embodiment, the EPA comprises four glycosylation sites. See for example WO 2017/035181 for a description of examples of bioconjugation of *E.coli O-*antigen polysaccharides to EPA carrier protein.

**Polysaccharide:** The term is discussed above. Suitable polysaccharides comprise 1 to 100, such as 1-50, 1-40, 1-30, 1-20, and 1-10, 3-50, 3-40, e.g. at least 5, such as 5-40, e.g. 7-30, e.g. 7 to 25, e.g. 10 to 20, e.g. 5 - 20, repeating units n. Such repeating units contain (i.e. comprise or consist of) (i) non-modified mono-saccharides and/or (ii) modified monosaccharides. The term "modified mono-saccharides" particularly relates to chemically modified mono-saccharides and in non-limiting embodiments includes N-acetylation, O-acetylation, amidation and/or amination of mono-saccharides. Such modified mono-saccharides may comprise one or more modifications, particularly one, two or three of the above modifications, at the same mono-saccharide.

In embodiments of the invention, suitable repeating units comprise mono-saccharides selected from the group consisting of Mannose, Rhamnose, Glucose, Fucose, Galactose, modified Mannose, modified Rhamnose, modified Glucose, modified Fucose, and modified Galactose. Non-limiting and exemplary structures of *E. coli O-*antigen polysaccharides are shown below in Table 1. A single repeating unit for each *E. coli* O-antigen polysaccharide is shown. In this table, each n is independently an integer of 1 to 100, such as 1-50, 1-40, 1-30, 1-20, and 1-10, 3-50, 3-40, e.g. at least 5, such as 5-40, e.g. 7-30, e.g. 7 to 25, e.g. 10 to 20, e.g. 5 - 20, but in some instances can be 1-2.

**Table 1: Structures of E. coli O-antigen Polysaccharides**

| ***E. coli* O-antigen Polysaccharide** |
|---|
| **Structure of Repeating Unit** |
| O4 antigen polysaccharide (O4) |
| 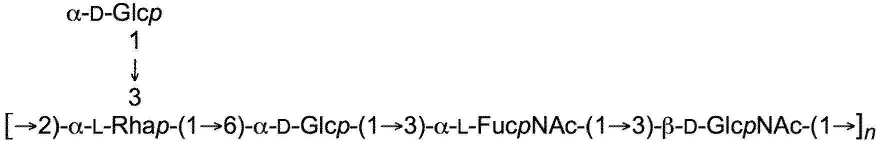 |
| O1A antigen polysaccharide (O1A) |
| 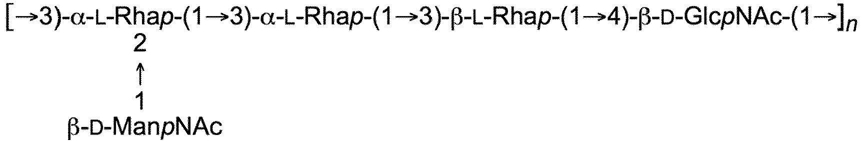 |
| O2 antigen polysaccharide (O2) |
| 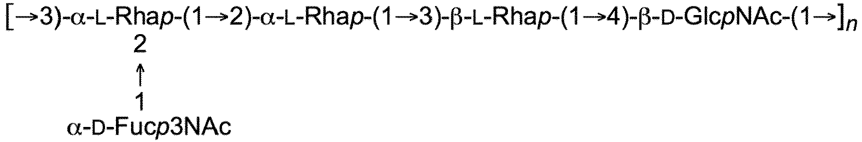 |
| O6A antigen polysaccharide (O6) |
| 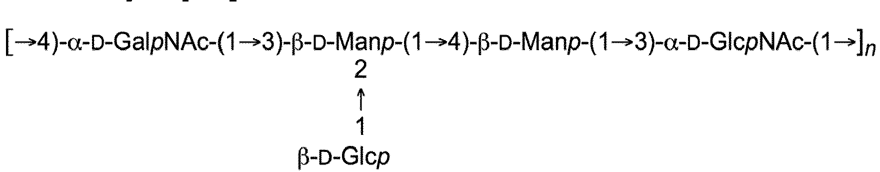 |
| O8 antigen polysaccharide (O8) |
| **α-D-Man*p*3Me-(1→[3)-β-D-Man*p*-(1→2)-α-D-Man*p*-(1→2)-α-D-Man*p*-(1→]*ₙ*** |
| 015 antigen polysaccharide (015) |
| **[→2)-β-D-Gal*p*-(1→3)-α-L-Fuc*p*NAc-(1→3)-β-D-Glc*p*NAc-(1→]*ₙ*** |
| 016 antigen polysaccharide (016) |
| 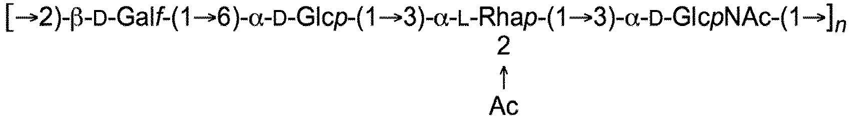 |
| O18A antigen polysaccharide (O18A) |
| 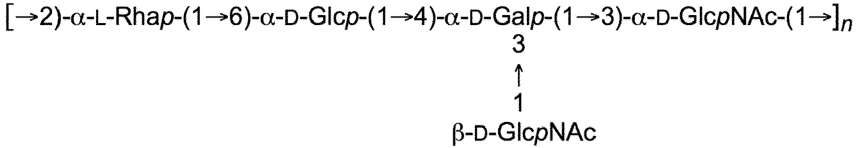 |
| O25B antigen polysaccharide (O25B) |
| 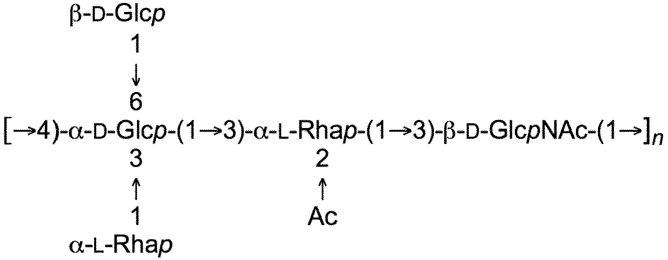 |
| O75 antigen polysaccharide (O75) |
| 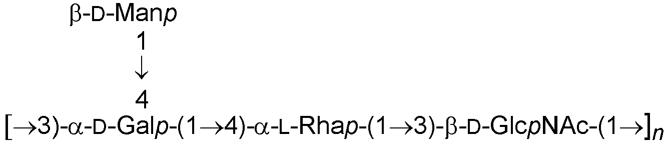 |

**Sample:** The term sample is known in the field. It includes any material which, optionally after dilution, may be supplied to an analytical system. Such sample particularly include (i) production batches of glycoconjugate production (including in-process batches and released / stored production batches); (ii) compositions comprising multiple glycoconjugates, such as pharmaceutical compositions comprising a multivalent vaccine.

Suitable samples comprise, in addition to the glycoconjugate, (i) an aqueous matrix; (ii) optionally carrier protein free of polysaccharides (or free peptide in case of glycopeptides; or free lipid in case of glycolipids), (iii) optionally polysaccharides not bound to carrier protein (or peptide, or lipid, herein: "free PS"), (iv) optionally non-related proteins (or peptides, or lipids). The aqueous matrix (i) may contain one or more of buffers (e.g. phosphate buffer), inorganic salts (e.g. NaCl), sugar alcohols (e.g. D-Sorbitol), non-ionic surfactants (e.g. Polysorbate 80). The non-related proteins (iv) may include up to 10 %, up to 50 % or even up to 90% process related impurities (e.g. host cell proteins). It is considered particularly beneficial that the inventive method is tolerant to a wide variety of additional components in the sample. It is thus suitable to analyse a sample without laborious preparation and containing materials that are otherwise interfering to standard analytical protocols.

In an embodiment, the sample comprises **one single glycoconjugate.**

In a further embodiment, the sample comprises **a multitude of glycoconjugates,** such as 2 - 20, e.g. 4 - 10 glycoconjugates. Again, glycoconjugates preferably relates to glycoproteins. The inventive method therefore also allows analysis of complex samples comprising a multitude of glycoconjugates, e.g. having glycans from multiple serotypes. Thus, even complex samples for release of a drug product, such as a multivalent conjugate vaccine, may be analysed by the inventive method. It is apparent that the inventive method advances production of drug products comprising a multitude of serotypes and improves quality and safety of such complex drug products.

It is apparent that the inventive method is also suited to verify the absence of glycoconjugates, e.g. blank samples, and hence in certain embodiments a sample comprises no glycoconjugate.

In one embodiment, the sample comprises one carrier protein or carrier peptide. In another embodiment, the sample comprises **more than one carrier protein or carrier peptide.** The inventive method is therefore suited to analyze samples comprising multiple different glycoproteins / glycopeptides, not only comprising different glycosylation patterns of the same carrier protein / peptide, but also differing in the carrier protein / peptide. The term carrier protein / peptide thus refers to one single carrier protein / peptide as outlined above and also to a multitude of carrier proteins / peptides, such as 2-10, e.g. 2-5 different carrier proteins / peptides being present in a sample.

**Analytical method:** The method according to the invention allows for the identification and absolute quantification of **total polysaccharide component content** in a sample. Furthermore, the method of the invention is able to differentiate between the amount of bound and free polysaccharides in the sample. Accordingly, in one embodi-ment, the invention provides for a method for identifying and quantifying the **bound and free polysaccharides content** in a composition comprising at least one glycoconjugate. Furthermore, the method of the invention is able to confirm the **absence of a polysaccharide component** (bound and/or free PS) in a sample.

As discussed above, the inventive method comprises 3 steps: (a) calibrating; (b) measuring; (c) identifying and quantifying the polysaccharide component of a glycoconjugate, wherein preferably the glycoconjugate is in its native state. These steps shall be explained in further detail below and are further illustrated in the examples in the figures provided:
**Step (a),** establishing a calibration curve of the polysaccharide component by means of an LC-MS system: To prepare a calibration curve, aliquots of a reference material are subjected to an LC-MS system. The reference material is a sample with known identity and known absolute amount of said polysaccharide component(s). Such reference material may be obtained by subjecting a sample comprising the polysaccharide component to a conventional analytical protocol.

In an embodiment of the invention, step (a) includes the preparation of a reference material and calibrating an LC-MS system with said reference material. The preparation of a reference material may be accomplished according to steps a1-a3 and optionally a4-a5 as outlined below. Calibration of a reference material may be accomplished according to step a6 as outlined below.

Step (a1): This step comprises determination of identity of said glycoprotein in the reference material. Suitable analytical methods are known per se and include, for example, Western Blot electrophoresis or MS.

Step (a2): The following step comprises determination of total polysaccharide (PS) content of said glycoprotein in the reference material. Suitable analytical methods are known per se and include, for example, IC-PAD after hydrolysis.

Step (a3): The following step comprises determination of free PS content in the reference material. Suitable analytical methods are known per se and include, for example, IC-PAD after hydrolysation and separation of bound and non-bound PS.

Step (a4): The following optional step comprises determination of the degree of modification (in specific embodiments the modification is O-Acetylation) of said glycoprotein. Suitable analytical methods are known per se and include, for example, ion chromatography IC-CD after removal of modifying groups (e.g. release of O-Acetyl groups by hydrolysis).

Step (a5): The following optional step comprises determination of purity of said glycoprotein in the reference material. Suitable analytical methods are known per se and include, for example, RP-HPLC and/or SEC.

Following steps (a1...a3) and optionally (a4...a5) a reference material is obtained comprising the polysaccharide component of a glycoprotein. Aliquots thereof are prepared for the following step (a6). Such aliquots of the reference material contain polysaccharide component in known concentration, i.e. in a known absolute amount.

Step (a6): This step includes measuring of aliquots of the reference material by means of an LC-MS system. The data obtained (including retention time, peak identification, AUC determination) allow to establish a calibration curve. In this step, the reference material is separated via LC first, the eluate is subjected to In-Source fragmentation (ISF) inside the MS detector by adapting the ionisation voltage (cone voltage). It is understood that step a6 is performed after aliquots of the reference material are obtained. Such calibration curve being specific to the LC-MS system and the parameters used.

As outlined above, the glycoprotein is preferably in its native state. However, in alternative embodiments, it is possible to digest the glycoprotein with a peptidase, e.g. with trypsin, prior to subjecting the sample to the LC-MS step of the analysis. Such digestion with a peptidase, e.g. trypsin, only leads to cleavage of peptide linkages but does not result in cleavage of a sugar-peptide bond. In case of glycoprotein - containing samples, such digestion leads to the generation of glycopeptides that are subjected to the LC-MS step of the analysis. In that case, the reference material is digested before performing step (a6) and the sample is digested before performing step (b1). The resulting glycopeptides may still be regarded as being in a native state, i.e. neither subjected to (i) enzymatic digestion with an enzyme that removes the polysaccharide component from the carrier protein nor to (ii) a chemical reaction, e.g. derivatisation, in each case prior to introducing the sample into the LC-MS system. Digestion of glycoproteins with a peptidase, e.g. treatment with trypsin, is known to the skilled person.

In preferred embodiments of the invention, the sample is not digested with an enzyme, such as a peptidase.

**Step (b),** measuring the sample on the same LC-MS system: Measuring a sample on a LC-MS system is known per se, it includes (b1) providing a sample to the LC-MS system and (b2) measuring the sample on the LC-MS system.

It is apparent to the skilled person that the calibration of step (a) may be used for measuring of one single sample in step (b) or for measuring a multitude of samples in step (b). Thus steps (b1) and (2) may be performed repeatedly for measuring a multitude of samples. For example, 2 samples from the same serotype, are measured with the same calibration curve by providing the first sample (b1) and measuring the first sample (b2) followed by providing the second sample (b1') and measuring the second sample (b2'). Thus measuring a sample includes measuring a single sample and measuring a multitude of samples.

Step (b1): Samples may be provided to the LC-MS system in any known manner. Typically, the injection from a vial comprising the sample into the system by way of an autosampler is chosen. The sample may be directly obtained from a manufacturing batch. The sample may be diluted to match with a concentration range of the calibration curve. In case of glycoprotein - containing samples, the sample is preferably in its native state.

In alternative embodiments, such sample may be digested with a peptidase, such as trypsin, to subject the glycopeptides for analysis. As discussed above, the resulting glycopeptides may still be regarded as being in a native state, i.e. neither subjected to (i) enzymatic digestion with an enzyme that removes the polysaccharide component from the carrier protein nor to (ii) a chemical reaction, e.g. derivatisation, in each case prior to introducing the sample into the LC-MS system. Thus, in methods according to the invention, the sugar-peptide bonds are not cleaved prior to subjecting the sample to the LC-MS step of the analysis.

In that alternative embodiment, the reference material is digested as well before performing step (a6).

In preferred embodiments of the methods of the invention, the sample is not digested with a peptidase, nor with any enzyme. Methods without enzymatic digestion have the advantage to make the analysis much simpler.

Step (b2): According to the inventive method, the sample is measured with the same parameters as in step (a6) above. Preferably, the sample is measured on the same LC-MS system which was used for preparing the calibration curve. Preferably, the sample is measured within 8 hours after the calibration curve is established. All these measures improve data quality; they are known to the skilled person and consider the sensitivity of LC-MS systems towards external factors.

In a first embodiment, the measuring of the sample includes
- determination of **identity** of the sample and
- determination of **PS content** of the glycoprotein This allows to determine the absolute quantity of the glycan chain.

In a second embodiment, the measuring of the sample includes
- determination of **identity** of the sample and
- determination of **PS content** of the glycoprotein and
- determination of **acetylated PS content** of the glycoprotein.

This allows to additionally determine the degree of acetylation in the sample.

In a third embodiment, the measuring of the sample includes
- determination of **identity** of the sample and
- determination of **PS content** of the glycoprotein and
- determination of **sample purity.**

In a fourth embodiment, the measuring of the sample includes
- determination of **identity** of the sample and
- determination of **PS content** of the glycoprotein and
- determination of **acetylated PS** content of the glycoprotein and
- determination of sample **purity.**

In a fifth embodiment, the measuring of the sample includes
- determination of **identity** of the sample and
- determination of **PS content** of the glycoprotein and
- determination of **free PS** content.

This allows to additionally determine the (relative or absolute) amount of non-conjugated glycan.

In a sixth embodiment, the measuring of the sample includes
- determination of **identity** of the sample and
- determination of **PS content** of the glycoprotein and
- determination of **acetylated PS content** of the glycoprotein and
- determination of **free PS content.**

This allows to additionally determine the amount (relative or absolute) of non-conjugated glycan also considering the degree of bound acetylated PS.

In a seventh embodiment, the measuring of the sample includes
- determination of **identity** of the sample and
- determination of **PS content** of the glycoprotein and
- determination of **acetylated PS** content of the glycoprotein and
- determination of **free PS** content and
- determination of **free acetylated PS** content.

This allows to additionally determine the amount of free acetylated PS.

In an eighth embodiment, the measuring of the sample includes
- determination of **identity** of the sample and
- determination of **PS content** of the glycoprotein and
- determination of **free PS content** of the sample and
- determination of **purity** of the sample.

In a ninth embodiment, the measuring of the sample includes
- determination of **identity** of the sample and
- determination of **PS content** of the glycoprotein and
- determination of **acetylated PS content** of the glycoprotein and
- determination of **free PS content** of the sample, and
- determination of **purity** of the sample.

In a tenth embodiment, the measuring of the sample includes
- determination of **identity** of the sample and
- determination of **PS content** of the glycoprotein and
- determination of **acetylated PS content** of the glycoprotein and
- determination of **free PS content** of the sample and
- determination of **free acetylated PS** content of the sample and
- determination of **purity** of the sample.

Thus, in embodiments of the invention, the **simultaneous** determination of the identity of the sample and one or more of the following is achieved: PS content, acetylated PS content, free PS content, free acetylated PS content and purity of the sample. Notably, simultaneous determination of the identity of the sample and the following parameters is usually not possible in case of methods that involve a sample preparation step to release the glycans from the carrier molecule, e.g. a carrier protein, or that involve derivatisation of the glycoprotein (additional impurity introduced): free PS content, free acetylated PS content and purity of the sample.

In other embodiments, the method for the analysis of a polysaccharide component of a glycoprotein in a sample regarding the aspects outlined in the first - tenth embodiment comprises the steps of: (a) establishing a calibration curve of said polysaccharide component by means of an LC-MS system, wherein this step (a) includes the preparation of a reference material (steps a1-a3 and optionally a4-a5) and calibrating an LC-MS system with said reference material (step a6) and wherein the calibration curve is established by separation of the aliquots of said reference material via LC, and subjecting the eluate of the LC to in-source fragmentation inside the MS detector by adjusting the ionisation voltage; (b) measuring the sample on the same LC-MS system using the same parameters as in step a (a6) with the same LC-MS system; (c) comparing the results of (a) and (b) to thereby analyse said polysaccharide component in said sample.

Notably, further fragmentation, e.g. using CID or ETD is not required. Thus, in an embodiment, the invention as described herein provides a method, where no additional fragmentation of the ion that is obtained after in-source fragmentation, is required.

In an embodiment, the invention provides a method as described herein, where **no internal standard** is added to the sample. In order to provide reliable results, it was found sufficient to generate a separate calibration curve. It is regarded beneficial that it is not required to use an internal standard as omitting it reduces handling steps and thus simplifies the method.

The **purity** of a sample may be determined in a known manner, e.g., via refractive index detector, via UV detector, of the LC part of the LC-MS system. Alternatively, or in addition, the purity may be determined by the MS. This may be done by looking at the total ion current.

**Step (c),** comparing the results of (a) and (b) to thereby analyse the polysaccharide component in the sample: Until now, LC-MS systems were not used for absolute quantification of a polysaccharide component in a glycoconjugate against a calibration curve. Accordingly, step (c) includes (c1) identification of characteristic peaks for each PS in the sample and (c2) comparing the Area Under the Curve (AUC) for such peak with the calibration curve. It is apparent to the skilled person that in embodiments where the measurement of a sample in step (b) was repeated for a multitude of samples (e.g. of the same serotype, or including the same glycoprotein) as described above, step (c) may likewise be repeated for each sample, using the same calibration curve.

In a **second aspect,** the invention relates to the use of a liquid chromatography - mass spectrometry system ("LC-MS system") to analyse a polysaccharide component of a glycoconjugate in a sample. In a preferred embodiment, said glycoprotein is in its native state. The above definitions, such as "sample", "glycoconjugate", "polysaccharide", "carrier protein", and "native state" are likewise applicable to this second aspect of the invention. Particularly, the term "glycoconjugate" includes the meaning of "glycoprotein" and more specifically of a "carrier protein to which one or more polysaccharides are attached". This aspect of the invention shall be explained in further detail below:
**Analysis:** Again, it is important to note that said analysing includes both, the **identification** of said polysaccharide component, **and** the **absolute quantification** of said polysaccharide component. **Identification** of a PS component includes confirmation of presence and confirmation of absences of said PS component. Thus, if it is expected a specific PS component being present in the sample, e.g. as the sample stems from a production batch, the identification of said PS component is the confirmation of its presence. Likewise, it may be expected that a specific PS component being absent in a sample, which can be confirmed as well. **Absolute quantification** of said PS component includes determination of concentration measured e.g. in µg [PS-component] / mL [Sample].

In embodiments, the invention also relates to the use of an LC-MS system for **in-process control** in the production of glycoconjugates, particularly for in-process control in the production of glycoconjugate vaccines.

In embodiments, the invention also relates to the use of an LC-MS system for **release control** of produced glycoconjugates, particularly for release control in the production of glycoconjugate vaccines. Thus, the LC-MS system may be used as a **release assay** for a drug substance or a drug product; said drug substance or drug product comprising one or more glycoconjugates, particularly one or more glycoconjugate vaccines.

In embodiments, the invention also relates to the use of an LC-MS system for **stability control** of stored glycoconjugates, particularly for stability control of stored glycoconjugate vaccines. Thus, the LC-MS system may be used as an **assay for shelf life** of a drug substance or a drug product; said drug substance or drug product comprising one or more glycoconjugates, particularly one or more glycoconjugate vaccines.

In embodiments, the invention also relates to the use of an LC-MS system for **process** - **optimisation** in the development of glycoconjugate manufacturing, particularly glycoconjugate vaccines manufacturing. Using an LC-MS system as described herein significantly simplifies identification of critical parameters and thus allows faster development and shortens timelines during scale-up.

**LC-MS system:** HPLC systems connected to a mass spectrometric detector are commonly referred to as LC-MS systems. These detectors are capable to determine the molecular mass of a specific analyte present in a sample. Their precision and mass accuracy are often referred to as the gold standard for determining molecular masses of molecules.

A known side effect of analyzing glycoconjugates, such as glycoproteins, on a LC-MS system is the fragmentation of the glycan when injecting the sample into the detector. This effect is called "In-Source fragmentation" (ISF) and related to the voltage applied during injection (the so-called "cone voltage"). ISF is not ideal for a well performing MS detector as it can lead to unknown / unidentifiable ion fragments in complex samples. Therefore, suppliers test for low ISF during system performance qualification (<2%).

In the MS-field, ISF is commonly known and for glycan occupancy testing not desirable as it can completely remove the glycan modification from the remaining part of the conjugate (e.g. the peptide chain from a glycopeptide). On the other hand, sugar fragmentation is performed to further identify and characterize monosaccharide composition by reporter ions. However, this fragmentation usually requires much higher energy and therefore different MS-techniques (CID, ETD).

The inventors have surprisingly found that glycoconjugates subjected for LC-MS analysis display the effect of ISF, which separates the glycan repeating unit, clearly visible as a distinct peak of the corresponding mass (Figure 1A). After adjusting of the cone voltage, the effect is not only visible when injecting a single glycoconjugate but also in more complex mixtures like a composition comprising multiple glycoconjugates (Figure 1B). As this effect occurs for all polysaccharides from different serotypes and each serotype-specific polysaccharide has a distinctive mass, it can be used to identify the specific serotype (via its polysaccharide) in the sample to be analysed.

In an embodiment, the LC-MS system is an LC-MS system with in-source fragmentation of the eluate obtained from the liquid chromatography. Such systems are commercially available, e.g. from Waters Corporation, Sciex, ThermoFisher Scientific.

In an embodiment, the LC-MS system further comprises a divert valve in front of the MS detector. Such valve allows diverting only a fraction of the eluate into the MS detector. Again, such systems are commercially available.

In embodiments, the glycoprotein is as defined above, it particularly comprises one carrier protein and one or more polysaccharides covalently bound to said protein. In certain embodiments the sample comprises more than one carrier protein, each carrying one or more covalently bound polysaccharides.

In embodiments, the carrier protein is as defined above. For example it is selected from the group consisting of detoxified Exotoxin A of *P. aeruginosa* (EPA), *E. coli* flagellin (FliC), CRM197, maltose binding protein (MBP), Diphtheria toxoid, Tetanus toxoid, detoxified hemolysin A of *S. aureus,* clumping factor A, clumping factor B, E. *coli* heat labile enterotoxin, detoxified variants of E. *coli* heat labile enterotoxin, Cholera toxin B subunit (CTB), cholera toxin, detoxified variants of cholera toxin, *E. coli* Sat protein, the passenger domain of E. *coli* Sat protein, *Streptococcus pneumoniae* Pneumolysin, Keyhole limpet hemocyanin (KLH), *P. aeruginosa* PcrV, outer membrane protein of *Neisseria meningitidis* (OMPC), and protein D from non-typeable *Haemophilus influenzae.* In a particular embodiment, the carrier protein is a detoxified exotoxin A of *Pseudomonas aeruginosa* (EPA).

In embodiments, the polysaccharides are as defined above. For example the polysaccharides comprise 1 - 100, such as 5 - 20 repeating units. Exemplary structures are shown in Table 1, above.

In embodiments, the sample further comprises an aqueous matrix; optionally carrier protein (or lipid or peptide) free of polysaccharides; optionally polysaccharides not bound to carrier protein (or lipid or peptide); and optionally non-related proteins.

The list of **references** provides additional information in the context of the present invention.
(1) thermofisher.com/ch/en/home/industrial/chromatogr aphy/chromatography-learning-center/ion-chromatography-information/ion-chromatography-analysis-analyte/analyzing-carbohydrates-hpae-pad-ion-chromatography.html
(2) Mazsaroff et al., Anal. Chem., 1997
(3) Ivancic et al., Analytical Biochemistry, 2010
(4) US 2020/041470
(5) Echeverria et al., Analytical Chemistry, 2015
(6) Jeong et al., Analytical Chemistry, 2012

To further illustrate the invention, the following **examples** are provided. These examples are provided with no intend to limit the scope of the invention.

### I. Preparation of reference material

A glycoprotein sample in larger quantities is directly obtained from a manufacturing batch and is aliquoted and stored appropriately (e.g. -80 °C). The different characterization steps are performed on thawed aliquots of said glycoprotein sample.
**1) Determine the correct identity of the reference material.** A standard western blot protocol is followed using a specific antibody which has been selected and tested for specificity for the polysaccharide chain of the glycoprotein of interest. Optionally, the correct identity of the carrier protein is determined using a specific antibody for the carrier protein.
**2) Determine the total polysaccharide content within the reference material.** A total acidic hydrolysis into monosaccharides is performed with subsequent analysis by ion chromatography and pulsed amperometric detection (IC-PAD), according to the following instructions.

Take an aliquot of the reference material and hydrolyse for 2 h at 120 °C using Trifluoracetic acid (TFA) at a final concentration of 1.8 M. Optimal hydrolysis conditions (temperature, TFA concentration and time) may vary depending on the starting concentration of the polysaccharides. Optimal conditions must demonstrate to quantitatively release all the monosaccharides from the polysaccharide chain with no further degradation of the monosaccharide molecule targeted for absolute quantification.

After hydrolysis, cool the sample down to room temperature and then dry it by using a SpeedVac, typically at 30 °Cover night. Completely resuspend the dry sample in H2O (MilliQ-grade) and transfer the sample into an HPLC vial. Prepare a set of calibration standards using a commercially available monosaccharide (e.g. Mannose). If the targeted monosaccharide for quantification undergoes modification during the above-mentioned hydrolysis step (e.g. N-Acetylglucosamine is turned into Glucosamine) use the appropriate monosaccharide, or alternatively perform the hydrolysis procedure mentioned-above on the set of calibration standards as well.

Prepare an ion chromatography system (e.g. Dionex ICS-5000) equipped with a pulsed amperometric detector (PAD) which has a disposable gold electrode on Polytetrafluoroethylene (PTFE) installed. Use a Dionex CarboPac PA1 analytical column (4x 250 mm) and optionally a Dionex CarboPac PA1 guard column (4x 50 mm). Equilibrate the system with Eluent A, 16 mM NaOH for sample elution, and Eluent B, 500 mM NaOH for column cleaning. Sequentially inject the sample and the calibration standard set using the following instrument method / gradient profile:
- 0 to 24 min, 100 % Eluent A, 1 mL/min flow rate (elution)
- 25 to 32 min, 100 % Eluent B, 1 mL/min flow rate (wash)
- 33 to 60 min, 100 % Eluent A, 1 mL/min flow rate (re-equilibrate)

Depending on the targeted monosaccharide, these gradients may need to be optimized.

Use the area under the curve from the measured calibration set to obtain a calibration curve and then quantify the unknown sample. Optionally, the amount of targeted monosaccharide is then used to back-calculate the absolute amount of repeating units/polysaccharides in ug/mL in the glycoprotein sample.

**3) Determine the free polysaccharide content within the reference material.** The carrier protein bound polysaccharides are removed by a C4-cartridge, followed by a total acidic hydrolysis into monosaccharides with subsequent analysis by ion chromatography and pulsed amperometric detection. Depending on the size of the glycoprotein, a different carbon polymer length of the cartridge material may be chosen (e.g. C8-cartridge) to completely retain the carrier protein.

Because the sample preparation step is laborious, it is recommended to use an additional monosaccharide not present in the reference material as an internal standard (e.g. Galactose) to compensate for potential sample loss during preparation.

Take two aliquots of the reference material and add the same amount of internal standard. Equilibrate a C4 cartridge (e.g. Chromafix C4-SPE from Macherey-Nagel) according to the manufacturer's manual; e.g. 5 column volumes 100 % Methanol, then 5 column volumes 100% Acetonitrile, then 5 column volumes 5% v/v Acetonitrile. During the next step, collect the flow through containing the free polysaccharide: Apply one of the two aliquots onto the cartridge and subsequently apply 2 column volumes 5 % Acetonitrile. Measure the volume of the collected flow through and add an equal amount of 5 % Acetonitrile to the other aliquot, which has not been applied to the C4 cartridge. Dry both prepared samples using a SpeedVac, typically at 30 °C overnight. Completely resuspend both dried samples in H2O (MilliQ-grade) and then follow the procedure mentioned above for total acidic hydrolysis into monosaccharides: Add Trifluoracetic acid (TFA) to a final concentration of 1.8 M to both samples and hydrolyse for 2 h at 120 °C. (Optimal hydrolysis conditions may vary and should be optimized). After hydrolysis, both samples are cooled down to room temperature and then dried using a SpeedVac, typically at 30 °C overnight. Completely resuspend both dried samples in H2O (MilliQ-grade) and transfer into HPLC vials.

Prepare an ion chromatography system (e.g. Dionex ICS-5000) equipped with a pulsed amperometric detector (PAD) which has a disposable gold electrode on Polytetrafluoroethylene (PTFE) installed. Use a Dionex CarboPac PA1 analytical column (4x 250 mm) and optionally a Dionex CarboPac PA1 guard column (4x 50 mm). Equilibrate the system with Eluent A, 16 mM NaOH for sample elution, and Eluent B, 500 mM NaOH for column cleaning. Sequentially inject both prepared samples using the following instrument method / gradient profile:
- 0 to 24 min, 100 % Eluent A, 1 mL/min flow rate (elution)
- 25 to 32 min, 100 % Eluent B, 1 mL/min flow rate (wash)
- 33 to 60 min, 100 % Eluent A, 1 mL/min flow rate (re-equilibrate)

Depending on the targeted monosaccharide, these gradients may need to be optimized.

Use the area under the curve from the targeted monosaccharide (e.g. Mannose) and the applied internal standard (e.g. Galactose) to normalize the measured areas. The free polysaccharide content of the analysed sample is determined by relatively comparing the normalized areas of the two measured aliquots: The C4-cartridge treated aliquot represents the percentage of free polysaccharides within the sample compared to the non-C4-cartridge treated aliquot which represents 100 % of available polysaccharides. Use the obtained value of free polysaccharides to calculate from the above determined total polysaccharide content the amount of "bound polysaccharides".

**4) Determine the degree of modification of the polysaccharide chain in the reference material.** This optional step describes the determination of O-Acetylated sugar moieties which uses a mild alkaline hydrolysis followed with subsequent analysis by ion chromatography and conductivity detection.

Take an aliquot of the reference material and perform a desalting step to remove free Acetate molecules in the sample (e.g. Zeba Spin column, PD-10 column) by following the manufacturer's manual. Add an internal standard to the desalted sample (e.g. Propionate, 20 pg/mL) and hydrolyse for 2 h at 37 °C using NaOH at a final concentration of 10 mM. Optimal hydrolysis conditions (NaOH concentration, temperature and time) may vary depending on the starting concentration of the polysaccharides. Optimal conditions must demonstrate to quantitatively release all the O-Acetate groups from the polysaccharide chain with no further degradation of the Acetate in the sample.

After hydrolysis, the sample is cooled down to room temperature and then filtered to remove the residual protein which might interfere during HPLC analysis (e.g. centrifugal filter, PES 3 kDa). Follow the manufacturer's manual to prepare the filters and collect the filtrate containing the released Acetate molecules.

Prepare a set of calibration standards using a commercially available Acetate standard for ion chromatography. The calibration standard sets must contain the same amount of internal standard as applied above (e.g. Propionate, 20 pg/mL).

Prepare an ion chromatography system (e.g. Dionex ICS-5000) equipped with a conductivity detector and a suppressor installed. Use a Dionex IonPac AS11-HC analytical column (4x 250 mm) and optionally a Dionex IonPac AS11-HC guard column (4x 50 mm). Equilibrate the system with Eluent A, 1 mM NaOH for sample elution, and Eluent B, 100 mM NaOH for column cleaning. Sequentially inject the sample and the calibration standard set using the following instrument method / gradient profile:
- 0 to 15 min, 100 % Eluent A, 1.5 mL/min flow rate, Suppressor 4 mA, (elution)
- 16 to 21 min, 100 % Eluent B, 1.5 mL/min flow rate, Suppressor 372 mA, (wash)
- 22 to 25 min, 100 % Eluent A, 1.5 mL/min flow rate, Suppressor 4 mA (re-equilibrate)

Depending on the ion chromatography system, the suppressor setting may vary.

Use the internal standard to normalize the area under the curve for both, the measured calibration set and the unknown sample. Then use the obtained calibration curve to quantify the Acetate concentration in the unknown sample. The degree of O-acetylated monosaccharide can be calculated by determining the ratio of Acetate per determined polysaccharide content (as described above).

**5) Optionally, determine the relative purity of the reference material.** This is achieved by size exclusion chromatography and/or reverse phase chromatography. Select an appropriate column for the targeted glycoprotein (e.g. Supelco TSKgel G3000SWXL for size exclusion, Cosmosil 5C4-AR-300 for reverse phase) and perform the chromatography step according to the manufacturer's manual. For example, measured absorbance at 215 nm can be used to determine the glycoprotein's relative purity compared to other compounds that absorb at 215 nm. Follow the HPLC software's manual to determine relative purity (in %) of the glycoprotein.

### II. Analysis on the LC-MS system

A glycoprotein sample to be analysed is directly obtained from a manufacturing batch. To identify and quantify the polysaccharide content of said sample, use a reference material prepared in advance as described above reflecting the same glycoprotein species, e.g. harbouring the same glycan structure on the same carrier protein. The sample to be analysed can also contain multiple different glycoproteins, if the reference material used in the below mentioned protocol is identical in terms of composition and glycan structure.

If not otherwise mentioned, use MS grade chemicals to prepare eluents.

Note: The glycoprotein to be analysed does not need to be derivatised (e.g. via isotope labeling). Furthermore, no enzymatic treatments are needed, hence lengthy sample preparation before analysis is not required. The glycoprotein can be considered to be analysed in its native state as described above. Further, no internal standard for quantification is added to the sample but instead the generation of a separate calibration curve is sufficient.
**1) Optionally perform a buffer exchange of the sample and the calibration reference standard material.** This step may be desired to prevent certain matrix components entering the MS detector. However, it is likely that the buffer exchange also removes free polysaccharide fragments thereby prohibiting a correct determination of the free polysaccharide content within the said sample. Instead it is recommended to use a divert valve between the LC and the MS system which can be programmed to divert undesired components into the waste after the elution from the liquid chromatography.
   If performed, use centrifugal filters with an appropriate molecular weight cut off to exchange the buffer at least 3 times to eluent A (H2O MilliQ-grade, 0.1% v/v Formic acid). The amount of sample (e.g. 30 pg) depends on the glycoprotein of interest and must be optimized.
**2) Prepare HPLC vials with the sample to be analysed and the reference material.** Optimal concentrations depend on the used LC-MS system. To create a calibration curve, the different calibration points of the reference material can be adapted by either injecting the same volume of different prepared concentrations or by injecting different volumes of the same concentration. This depends on the LC system's injector linearity as well as on the sample to be analysed (e.g. potential interferences by adsorption to the vial over time, etc.) and must be optimized for the specific sample.
**3) Prepare the LC-MS system.** An ACQUITY-Synapt G2 HDMS from Waters, as an exemplary system, is prepared by calibrating the MS detector according to the manufacturer's manual with NaI. Use a suitable reverse phase column for your system (e.g. ACQUITY BEH300 C4, 1.7 um 2.1 x 150 mm, Waters) capable of eluting your protein. Depending on the size of the glycoprotein to be analysed, a different carbon polymer length of the reverse phase material may be chosen (e.g. C8 or C18) to retain and elute the sample properly. Equilibrate the system with Eluent A (H2O MilliQ-grade, 0.1% v/v formic acid), and Eluent B (Acetonitrile, 0.1% v/v formic acid).
**4) Sequentially inject the sample and the calibration points of the reference material.** The following instrument method / gradient profile are suitable:
   - Initial, 95 % Eluent A, 5 % Eluent B, 0.4 mL/min flow rate
   - 1 min, 95 % Eluent A, 5% Eluent B, 0.4 mL/min flow rate
   - 9 min, 60 % Eluent A, 40 % Eluent B, 0.4 mL/min flow rate
   - 11 min, 5 % Eluent A, 95 % Eluent B, 0.4 mL/min flow rate
   - 12 min, 5 % Eluent A, 95 % Eluent B, 0.4 mL/min flow rate
   - 12.5 min, 95 % Eluent A, 5 % Eluent B, 0.4 mL/min flow rate
   - 15 min, 95 % Eluent A, 5 % Eluent B, 0.4 mL/min flow rate

   Depending on the targeted glycoprotein and the used system/column, these gradients as well as injection amounts may be adapted.
**5) Analyse the eluted proteins with the attached detectors:** Optionally, acquire UV absorbance signal at the desired wavelength. If UV absorbance signal is desired, larger amount of the sample may need to be injected and injection concentration must be optimized. Optionally, use a split/divert valve between the LC and the MS system to prevent oversaturating the MS detector. Use the system's MS detector (e.g. quadrupole TOF Synapt G2 HDMS spectrometer, Waters) with electrospray ionization in positive resolution mode. Acquire data at the instruments optimized conditions. The following parameters were used on a TOF Synapt G2 HDMS spectrometer:
   - 1 sec scan time
   - 3 kV capillary voltage
   - 37 V sampling cone voltage
   - 120 °C source temperature
   - 450 °C desolvation temperature
   - 20 L/H cone gas flow
   - 550 L/H desolvation gas flow.
   - MS function 500-2000 Da with 4 eV trap- and no transfer-collision energy.
   - Optionally: Acquire MSMS function 100-1000 Da at target mass with 4 eV trap- and ramped transfer collision energy 18-25 eV.
   - Lock spray acquisition of Leucine Enkephalin at 30 sec intervals.

   The critical parameter is the sampling cone voltage, resulting in in-source fragmentation of the glycan chain. Depending on the glycoprotein to be analysed, this cone voltage may need to be optimized.
**6) Process acquired data.** Data processing is performed by using the manufacturer's provided software packages (e.g. MassLynx, Waters). First, combine spectra across the main chromatographic peak (TIC MS function) which represents the eluted glycoprotein. If LC-MS acquisition parameters were optimized appropriately, the in-source fragmentation results in a highly specific mass peak originating from the polysaccharide chain(s) of the analysed glycoprotein. (c.f. fig. 1A). Results of a sample which contains six different EPA glycoconjugates can be processed in analogy as mentioned above (c.f. fig. 1B). Depending on the glycan structure as well as the optimized parameters, a mass related to the repeating unit of the polysaccharide may be observed. The specific mass peak can be used to confirm the identity of the analysed glycoprotein. Second, for the next step use the extracted chromatograms of the identified specific mass peak: The area under the curve at the main chromatographic peak (representing the eluted glycoprotein) corresponds to the amount of injected bound polysaccharide of the reference material. With a calibration curve (polysaccharide amount vs. area under the curve; c.f. fig. 2) the absolute quantity of the polysaccharide content in the unknown sample (at the main chromatographic peak) can be determined.

Optionally, the extracted chromatograms of the identified specific mass peak can further be used to determine the relative amount of free polysaccharide: Compare the sum of the area under the curve of all but not the main chromatographic peak to the area under the curve of the main chromatographic peak (representing the eluted glycoprotein). Determination of free polysaccharides within the sample may further be optimized by extracting chromatograms for different fragments of the polysaccharide chain (e.g. mono-, disaccharide fragments, modified saccharides, polysaccharide-specific oxonium ions, etc).

Optionally, determine the degree of modification of the polysaccharide with the combined spectra across the chromatographic main peak (representing the eluted glycoprotein): In the example of O-Acetylated polysaccharide chains, the specific mass peak identified may have a neighbouring peak with a mass difference of 42 Da representing a de-acetylated form of the glycan (c.f. fig. 3). By comparing the area under the curve for these two peaks, the degree of modification can be determined.

Optionally, the acquired UV chromatogram and/or the TIC chromatogram can be used to determine the relative purity of the analysed sample: Compare the sum of the area under the curve of all but not the main chromatographic peak to the area under the curve of the main chromatographic peak (representing the eluted glycoprotein).

### III. Conclusion

It is to be noted that for multivalent glycoconjugate vaccine (currently a 10-valent *E. coli* (ExPEC) vaccine is for instance under development, comprising 10 different *E. coli* O-antigen polysaccharides each independently covalently coupled to EPA carrier protein, i.e. containing 10 drug substances), the release of each of the individual drug substances before the present invention typically required several different assays, including a PS content assay (similar to step I.2 above), as well as subsequently (i.e., dependent on outcome of the PS content assay) free PS content assays (similar to step I.3 above) and for some serotypes an assay to determine O-Acetylation (similar to step I.4 above). This sequential dependency of two other assays leads to a low throughput during quality control ("QC") release. In addition, identity and purity assays (similar to steps I.1 and I.5 above, respectively) also are typically to be performed for release of each drug substance.

One of the advantages of the methods of the invention is that these 5 different assays now can all be combined in one analytical procedure (section II above) where the only sample preparation is a dilution step, which can reduce the time required for QC testing chemical analysis from about two weeks down to about two days, resulting in a reduction of required time, materials and operators to obtain the same relevant information. Thus, the method results in significantly shortened batch release time at lower cost.

Moreover, the assay can be performed on individual drug substances, but also even after the individual drug substances have been mixed into a more complex drug product, e.g. on the final multivalent glycoconjugate vaccine composition.

Moreover, the high specificity of a spectrometric detector allows quantification in process intermediate samples where sample purity is generally much lower. This will reduce costs and time during process optimization and therefore reduce overall development costs of commercial manufactured glycoprotein-based vaccines.

## Claims

1. A method for analysing a polysaccharide component of a glycoprotein in a sample,
wherein said glycoprotein comprises one carrier protein and one or more polysaccharides covalently bond to said carrier protein, and
whereby
the analysis includes:
▪ the identification of said polysaccharide component, and
▪ the absolute quantification of said polysaccharide component;
the method comprises the steps of:
(a) establishing a calibration curve of said polysaccharide component by means of an LC-MS system;
(b) measuring the sample on the same LC-MS system;
(c) comparing the results of (a) and (b) to thereby analyse said polysaccharide component in said sample; and
wherein steps a and b include injecting glycoproteins - or glycopeptides obtained therefrom - into the LC-MS system and subjecting them to in-source fragmentation in the mass spectrometer.

2. The method of claim 1, wherein said glycoprotein is neither subjected to (i) enzymatic digestion with an enzyme that removes the polysaccharide component from the carrier protein nor to (ii) a chemical reaction, in each case prior to introducing the glycoprotein into said LC-MS system.

3. The method according to claim 1 - 2, where said carrier protein is selected from the group consisting of detoxified Exotoxin A of *P. aeruginosa* (EPA), *E*. *coli* flagellin (FliC), CRM197, maltose binding protein (MBP), Diphtheria toxoid, Tetanus toxoid, detoxified hemolysin A of *S. aureus,* clumping factor A, clumping factor B, *E. coli* heat labile enterotoxin, detoxified variants of *E. coli* heat labile enterotoxin, Cholera toxin B subunit (CTB), cholera toxin, detoxified variants of cholera toxin, *E. coli* Sat protein, the passenger domain of *E. coli* Sat protein, *Streptococcus pneumoniae* Pneumolysin, Keyhole limpet hemocyanin (KLH), *P. aeruginosa* PcrV, outer membrane protein of *Neisseria meningitidis* (OMPC), and protein D from non-typeable *Haemophilus influenza;*
preferably a detoxified exotoxin A of *Pseudomonas aeruginosa.*

4. The method according to any of claims 1 - 3, where said polysaccharide(s) comprise 1-100, preferably 5 - 20, repeating units,
said repeating units comprising non-modified monosaccharides and/or modified monosaccharides.

5. The method according to any of claims 1 - 4, where said sample further comprises:
▪ an aqueous matrix, said matrix optionally including one or more of buffers, inorganic salts, sugar alcohols, and non-ionic surfactants;
▪ optionally carrier protein free of polysaccharides;
▪ optionally polysaccharides not bound to carrier protein ("free PS");
▪ optionally non-related proteins.

6. The method according to any of claims 1 - 5, where said sample comprises a multitude of different glycoproteins, preferably 2 - 20, such as 4 - 10 glycoproteins, said glycoproteins differing in the polysaccharide components and/or in the carrier proteins.

7. The method according to any of claims 1 - 6, where said step (a) includes the preparation of a reference material (steps a1-a3 and optionally a4-a5) and calibrating an LC-MS system with said reference material (step a6):
(a1) determination of identity of said glycoprotein;
(a2) determination of total polysaccharide (PS) content of said glycoprotein in said reference material;
(a3) determination of free PS content in said reference material;
(a4) optionally determination of the degree of modification, particularly O-Acetylation, of said glycoprotein in said reference material;
(a5) optionally determination of purity of said glycoprotein in said reference material;
to thereby obtain a reference material comprising the polysaccharide component of a glycoprotein; followed by
(a6) measuring aliquots of said reference material by means of an LC-MS system,
to thereby establish said calibration curve.

8. The method according to claim 7, where
▪ in step (a1), the identity of said glycoprotein is determined by Western Blot electrophoresis or by MS; and/or
▪ in step (a2), the total PS content is determined by IC-PAD after hydrolysis; and/or
▪ in step (a3), the free PS content is determined by IC-PAD after hydrolysation and separation of bound and non-bound PS; and/or
▪ in step (a4), the degree of modification, particularly O-Acetylation, is determined by ion chromatography IC-CD after release of modifying groups, particularly release of O-Acetyl groups by hydrolysis; and/or
▪ in step (a5), purity of the glycoprotein is determined by means of RP-HPLC and/or SEC; and/or
▪ in step (a6), the calibration curve is established by separation of the aliquots via LC, and subjecting the eluate of the LC to in-source fragmentation inside the MS detector by adjusting the ionisation voltage.

9. The method according to claim 7 or 8, where said step (b) includes:
(b1) providing a sample; and
(b2) measuring the sample using the same parameters as in (a6) with the same LC-MS system.

10. The method according to claim 9, where said measuring (b2) includes determination of identity of the sample and one of the following:
▪ determination of PS content of the glycoprotein; OR
▪ determination of PS content and acetylated PS content of the glycoprotein; OR
▪ determination of PS content of the glycoprotein and determination of sample purity; OR
▪ determination of PS content and acetylated PS content of the glycoprotein and determination of sample purity; OR
▪ determination of PS content of the glycoprotein and determination of free PS content; OR
▪ determination of PS content and acetylated PS content of the glycoprotein and determination of free PS content; OR
▪ determination of PS content and acetylated PS content of the glycoprotein and determination of free PS content and free acetylated PS content;
▪ determination of PS content of the glycoprotein and determination of free PS content and purity of the sample; OR
▪ determination of PS content and acetylated PS content of the glycoprotein and determination of free PS content and purity of the sample; OR
▪ determination of PS content and acetylated PS content of the glycoprotein and determination of free PS content and free acetylated PS content and purity of the sample.

11. The method according to any of claims 1 - 10, where said step (c) includes:
(c1) identifying characteristic peaks for each PS in the sample; and
(c2) comparing the AUC for such peak with the calibration curve.

12. Use of liquid chromatography - mass spectrometry system ("LC-MS system") with in-source fragmentation of the eluate obtained from the liquid chromatography to analyse a polysaccharide component of a glycoprotein in a sample, wherein said glycoprotein comprises one carrier protein and one or more polysaccharides covalently bond to said carrier protein, and
whereby said analysing includes:
▪ injecting glycoproteins - or glycopeptides obtained therefrom - into the LC-MS system and subjecting them to in-source fragmentation in the mass spectrometer,
▪ establishing a calibration curve of said polysaccharide component by means of the LC-MS system,
▪ the identification of said polysaccharide component, and
▪ the absolute quantification of said polysaccharide component.

13. The use according to claim 12 wherein the glycoprotein is neither subjected to (i) enzymatic digestion with an enzyme that removes the polysaccharide component from the carrier protein nor to (ii) a chemical reaction, in each case prior to introducing the glycoprotein into said LC-MS system.

14. The use according to any of claims 12 - 13, where the LC-MS system further comprises a divert valve in front of the MS detector.

15. The use according to any of claims 12 - 14, where said carrier protein is selected from the group consisting of detoxified Exotoxin A of *P. aeruginosa* (EPA), *E. coli* flagellin (FliC), CRM197, maltose binding protein (MBP), Diphtheria toxoid, Tetanus toxoid, detoxified hemolysin A of *S. aureus,* clumping factor A, clumping factor B, *E. coli* heat labile enterotoxin, detoxified variants of *E. coli* heat labile enterotoxin, Cholera toxin B subunit (CTB), cholera toxin, detoxified variants of cholera toxin, *E. coli* Sat protein, the passenger domain of *E. coli* Sat protein, *Streptococcus pneumoniae* Pneumolysin, Keyhole limpet hemocyanin (KLH), *P. aeruginosa* PcrV, outer membrane protein of *Neisseria meningitidis* (OMPC), and protein D from non-typeable *Haemophilus influenza;* preferably detoxified exotoxin A of *Pseudomonas aeruginosa* and/or
said polysaccharides comprise 1 - 100, preferably 5 - 20 repeating units, said repeating units comprising non-modified monosaccharides and/or modified monosaccharides.

16. The use according to any of claims 12 - 15, where said sample further comprises
▪ an aqueous matrix, said matrix optionally including one or more of buffers, inorganic salts, sugar alcohols, and non-ionic surfactants;
▪ optionally carrier protein free of polysaccharides;
▪ optionally polysaccharides not bound to carrier protein; and
▪ optionally non-related proteins.

17. The use according to any of claims 12 - 16,
▪ for in-process control in the production of glycoconjugates;
▪ for release control of produced glycoconjugates;
▪ for stability control of stored glycoconjugates; and/or
▪ for process optimization in the production of glycoconjugates.

## Patentansprüche

1. Verfahren zum Analysieren einer Polysaccharidkomponente eines Glykoproteins in einer Probe,
wobei das Glykoprotein ein Trägerprotein und ein oder mehrere Polysaccharide umfasst, die kovalent an das Trägerprotein gebunden sind, und
wobei
die Analyse beinhaltet:
- die Identifizierung der Polysaccharidkomponente, und
- die absolute Quantifizierung der Polysaccharidkomponente;
das Verfahren die Schritte umfasst:
(a) Erstellen einer Kalibrierungskurve für die Polysaccharidkomponente mit Hilfe eines LC-MS-Systems;
(b) Messen der Probe auf demselben LC-MS-System;
(c) Vergleichen der Ergebnisse von (a) und (b), um dadurch die Polysaccharidkomponente in der Probe zu analysieren; und
wobei die Schritte a und b das Injizieren von Glykoproteinen - oder daraus erhaltenen Glykopeptide - in das LC-MS-System und das Unterziehen dieser einer In-Quellen-Fragmentierung in dem Massenspektrometer beinhalten.

2. Verfahren nach Anspruch 1, wobei das Glykoprotein weder (i) einem enzymatischen Verdau mit einem Enzym, das die Polysaccharidkomponente aus dem Trägerprotein entfernt, noch (ii) einer chemischen Reaktion unterzogen wird, jeweils vor der Einführung des Glykoproteins in das LC-MS-System.

3. Verfahren nach Anspruch 1 - 2, wobei das Trägerprotein aus der Gruppe ausgewählt ist, bestehend aus entgiftetem Exotoxin A von *P. aeruginosa* (EPA), *E*. coli-Flagellin (FliC), CRM197, Maltose-bindendem Protein (MBP), Diphtherietoxoid, Tetanustoxoid, entgiftetem Hämolysin A von *S. aureus,* Klumpenfaktor A, Klumpenfaktor B, hitzelabilem Enterotoxin von *E. coli,* entgifteter Varianten des hitzelabilen Enterotoxins von *E. coli,* Choleratoxin B-Untereinheit (CTB), Choleratoxin, entgifteten Varianten des Choleratoxins, *E*. coli-Sat-Protein, der Passagierdomäne des *E*. coli-Sat-Proteins, *Streptococcus pneumoniae-Pneumolysin,* Keyhole-Limpet-Hämocyanin (KLH), *P. aeruginosa* PcrV, äußerem Membranprotein von *Neisseria meningitidis* (OMPC) und Protein D aus nicht typisierbarem *Haemophilus influenza:* vorzugsweise einem entgifteten Exotoxin A von *Pseudomonas aeruginosa.*

4. Verfahren nach einem der Ansprüche 1 - 3, wobei das/die Polysaccharid(e) 1-100, vorzugsweise 5-20, sich wiederholende Einheiten umfasst/umfassen, wobei die sich wiederholenden Einheiten nicht-modifizierte Monosaccharide und/oder modifizierte Monosaccharide umfassen.

5. Verfahren nach einem der Ansprüche 1 - 4, wobei die Probe ferner umfasst:
- eine wässrige Matrix, wobei die Matrix optional einen oder mehrere Puffer, anorganische Salze, Zuckeralkohole und nichtionische Tenside beinhaltet;
- optional ein von Polysacchariden freies Trägerprotein;
- optional nicht an das Trägerprotein gebundene Polysaccharide (freies PS);
- optionale nicht verwandte Proteine.

6. Verfahren nach einem der Ansprüche 1 - 5, wobei die Probe eine Vielzahl verschiedener Glykoproteine umfasst, vorzugsweise 2 - 20, wie 4 - 10 Glykoproteine, wobei sich die Glykoproteine in den Polysaccharidkomponenten und/oder in den Trägerproteinen unterscheiden.

7. Verfahren nach einem der Ansprüche 1 - 6, wobei der Schritt (a) die Herstellung eines Referenzmaterials (Schritte a1-a3 und optional a4-a5) und die Kalibrierung eines LC-MS-Systems mit dem Referenzmaterial (Schritt a6) beinhaltet:
(a1) Bestimmung der Identität des Glykoproteins;
(a2) Bestimmung des Gesamtpolysaccharid- (PS)- Gehalts des Glykoproteins in dem Referenzmaterial;
(a3) Bestimmung des Gehalts an freiem PS in dem Referenzmaterial;
(a4) optional Bestimmung des Modifikationsgrades, insbesondere der O-Acetylierung, des Glykoproteins in dem Referenzmaterial;
(a5) optional die Bestimmung der Reinheit des Glykoproteins in dem Referenzmaterial;
um dadurch ein Referenzmaterial zu erhalten, das die Polysaccharidkomponente eines Glykoproteins umfasst; gefolgt von
(a6) Messung von Aliquots des Referenzmaterials mittels eines LC-MS-Systems, um dadurch die Kalibrierungskurve zu erstellen.

8. Verfahren nach Anspruch 7, wobei
- in Schritt (a1) die Identität des Glykoproteins durch Western-Blot-Elektrophorese oder durch MS bestimmt wird; und/oder
- in Schritt (a2) der Gesamt-PS-Gehalt durch IC-PAD nach Hydrolyse bestimmt wird; und/oder
- in Schritt (a3) der Gehalt an freiem PS durch IC-PAD nach Hydrolyse und Trennung von gebundenem und nicht gebundenem PS bestimmt wird; und/oder
- in Schritt (a4) der Modifizierungsgrad, insbesondere die O-Acetylierung, durch Ionenchromatographie IC-CD nach Freisetzung von modifizierenden Gruppen, insbesondere Freisetzung von O-Acetylgruppen durch Hydrolyse, bestimmt wird; und/oder
- in Schritt (a5) die Reinheit des Glykoproteins mittels RP-HPLC und/oder SEC bestimmt wird; und/oder
- in Schritt (a6) die Kalibrierkurve erstellt wird, indem die Aliquots mittels LC getrennt werden und das Eluat der LC einer In-Quell-Fragmentierung in dem MS-Detektor durch Anpassen der Ionisierungsspannung unterzogen wird.

9. Verfahren nach Anspruch 7 oder 8, wobei der Schritt (b) beinhaltet:
(b1) Bereitstellen einer Probe; und
(b2) Messen der Probe unter Verwendung der gleichen Parameter wie in (a6) mit dem gleichen LC-MS-System.

10. Verfahren nach Anspruch 9, wobei das Messen (b2) die Bestimmung der Identität der Probe und eine der Folgenden beinhaltet:
- Bestimmung des PS-Gehalts des Glykoproteins; ODER
- Bestimmung des PS-Gehalts und des Gehalts an acetyliertem PS des Glykoproteins; ODER
- Bestimmung des PS-Gehalts des Glykoproteins und Bestimmung der Probenreinheit; ODER
- Bestimmung des PS-Gehalts und des Gehalts an acetyliertem PS des Glykoproteins und Bestimmung der Probenreinheit; ODER
- Bestimmung des PS-Gehalts des Glykoproteins und Bestimmung des Gehalts an freiem PS; ODER
- Bestimmung des PS-Gehalts und des Gehalts an acetyliertem PS des Glykoproteins und Bestimmung des Gehalts an freiem PS; ODER
- Bestimmung des PS-Gehalts und des Gehalts an acetyliertem PS des Glykoproteins und Bestimmung des Gehalts an freiem PS und freiem acetyliertem PS;
- Bestimmung des PS-Gehalts des Glykoproteins und Bestimmung des freien PS-Gehalts und der Probenreinheit; ODER
- Bestimmung des PS-Gehalts und des Gehalts an acetyliertem PS des Glykoproteins und Bestimmung des Gehalts an freiem PS und der Probenreinheit; ODER
- Bestimmung des PS-Gehalts und des Gehalts an acetyliertem PS des Glykoproteins und Bestimmung des Gehalts an freiem PS und freiem acetyliertem PS sowie der Probenreinheit.

11. Verfahren nach einem der Ansprüche 1 - 10, wobei der Schritt (c) beinhaltet:
(c1) Identifizieren kennzeichnender Peaks für jedes PS in der Probe; und
(c2) Vergleichen der AUC für einen solchen Peak mit der Kalibrierkurve.

12. Verwendung eines Flüssigchromatographie-Massenspektrometriesystems ("LC-MS-System") mit In-Quell-Fragmentierung des aus der Flüssigchromatographie erhaltenen Eluats für die Analyse einer Polysaccharidkomponente eines Glykoproteins in einer Probe, wobei das Glykoprotein ein Trägerprotein und ein oder mehrere Polysaccharide umfasst, die kovalent an das Trägerprotein gebunden sind, und
wobei das Analysieren beinhaltet:
- Injizieren von Glykoproteinen - oder daraus erhaltenen Glykopeptiden - in das LC-MS-System und Unterziehen dieser einer In-Quell-Fragmentierung in dem Massenspektrometer,
- Erstellen einer Kalibrierungskurve der Polysaccharidkomponente mittels des LC-MS-Systems,
- die Identifizierung der Polysaccharidkomponente, und
- die absolute Quantifizierung der Polysaccharidkomponente.

13. Verwendung nach Anspruch 12, wobei das Glykoprotein weder (i) einem enzymatischen Verdau mit einem Enzym, das die Polysaccharidkomponente von dem Trägerprotein entfernt, noch (ii) einer chemischen Reaktion unterzogen wird, jeweils vor der Einführung des Glykoproteins in das LC-MS-System.

14. Verwendung nach einem der Ansprüche 12 - 13, wobei das LC-MS-System ferner ein Umleitungsventil vor dem MS-Detektor umfasst.

15. Verwendung nach einem der Ansprüche 12 - 14, wobei das Trägerprotein aus der Gruppe ausgewählt ist, bestehend aus entgiftetem Exotoxin A von *P. aeruginosa* (EPA), E. coli-Flagellin (FliC), CRM197, Maltose-bindendem Protein (MBP), Diphtherietoxoid, Tetanustoxoid, entgiftetem Hämolysin A von *S. aureus,* Klumpenfaktor A, Klumpenfaktor B, hitzelabilem Enterotoxin von *E. coli,* entgifteten Varianten des hitzelabilen Enterotoxins von *E. coli,* Choleratoxin B-Untereinheit (CTB), Choleratoxin, entgifteter Varianten des Choleratoxins, E. coli-Sat-Protein, der Passagierdomäne des E. coli-Sat-Proteins, *Streptococcus pneumoniae-Pneumolysin,* Keyhole-Limpet-Hämocyanin (KLH), *P. aeruginosa* PcrV, äußerem Membranprotein von *Neisseria meningitidis* (OMPC) und Protein D aus nicht typisierbarem *Haemophilus influenza*; vorzugsweise einem entgifteten Exotoxin A von *Pseudomonas aeruginosa* und/oder
die Polysaccharide 1 - 100, vorzugsweise 5 - 20, sich wiederholende Einheiten umfassen, wobei die sich wiederholenden Einheiten nicht-modifizierte Monosaccharide und/oder modifizierte Monosaccharide umfassen.

16. Verwendung nach einem der Ansprüche 12 - 15, wobei die Probe ferner umfasst:
- eine wässrige Matrix, wobei die Matrix optional einen oder mehrere Puffer, anorganische Salze, Zuckeralkohole und nichtionische Tenside beinhaltet;
- optional ein von Polysacchariden freies Trägerprotein;
- optional nicht an das Trägerprotein gebundene Polysaccharide;
- optional nicht verwandte Proteine.

17. Verwendung nach einem der Ansprüche 12 - 16,
- für In-Vorgang-Kontrolle bei der Produktion von Glykokonjugaten;
- für die Freisetzungskontrolle von produzierten Glykokonjugaten;
- für die Stabilitätskontrolle gespeicherter Glykokonjugaten; und/oder
- für Vorgangsoptimierung bei der Produktion von Glykokonjugaten.

## Revendications

1. Procédé d'analyse d'un composant polysaccharide d'une glycoprotéine dans un échantillon, dans lequel ladite glycoprotéine comprend une protéine porteuse et un ou plusieurs polysaccharides liés de façon covalente à ladite protéine porteuse, et
par lequel
l'analyse comprend :
• l'identification dudit composant polysaccharide, et
• la quantification absolue dudit composant polysaccharide ;
le procédé comprend les étapes suivantes :
(a) l'établissement d'une courbe d'étalonnage dudit composant polysaccharide au moyen d'un système LC-MS ;
(b) la mesure de l'échantillon sur le même système LC-MS ;
(c) la comparaison des résultats de (a) et (b) afin d'analyser ainsi ledit composant polysaccharide dans ledit échantillon ; et
dans lequel les étapes a et b comprennent l'injection de glycoprotéines - ou de glycopeptides obtenus à partir de celles-ci - dans le système LC-MS et leur soumission à une fragmentation dans la source dans le spectromètre de masse.

2. Procédé selon la revendication 1, dans lequel ladite glycoprotéine n'est soumise ni à (i) une digestion enzymatique avec une enzyme qui élimine le composant polysaccharide de la protéine porteuse, ni à (ii) une réaction chimique, dans chaque cas avant l'introduction de la glycoprotéine dans ledit système LC-MS.

3. Procédé selon la revendication 1 ou 2, où ladite protéine porteuse est sélectionnée dans le groupe constitué par exotoxine A détoxifiée de *P. aeruginosa* (EPA), flagelline *d'E. coli* (FliC), CRM197, protéine de liaison au maltose (MBP), anatoxine diphtérique, anatoxine tétanique, hémolysine A détoxifiée de *S*. *aureus,* facteur d'agglutination A, facteur d'agglutination B, entérotoxine thermolabile *d'E. coli,* variants détoxifiés de l'entérotoxine thermolabile *d'E. coli,* sous-unité B de la toxine cholérique (CTB), toxine cholérique, variants détoxifiés de la toxine cholérique, protéine Sat *d'E. coli,* domaine passager de la toxine cholérique, pneumolysine de *Streptococcus pneumoniae,* hémocyanine de patelle (KLH), PCrV de *P. aeruginosa,* protéine de membrane externe de *Neisseria meningitidis* (OMPC), et protéine D de *Haemophilus influenza* non typable ;
éventuellement une exotoxine A détoxifiée de *Pseudomonas aeruginosa.*

4. Procédé selon l'une quelconque des revendications 1 à 3, dans lequel ledit (lesdits) polysaccharide(s) comprend (comprennent) de 1 à 100 motifs répétés, éventuellement de 5 à 20 motifs répétés,
lesdits motifs répétés comprenant des monosaccharides non modifiés et/ou des monosaccharides modifiés.

5. Procédé selon l'une quelconque des revendications 1 à 4, où ledit échantillon comprend en outre :
• une matrice aqueuse, ladite matrice comprenant éventuellement un ou plusieurs tampons, sels inorganiques, alcools de sucre, et tensioactifs non ioniques ;
• éventuellement la protéine porteuse exempte de polysaccharides ;
• éventuellement des polysaccharides non liés à la protéine porteuse (« PS libre ») ;
• éventuellement des protéines non apparentées.

6. Procédé selon l'une quelconque des revendications 1 à 5, où ledit échantillon comprend une multitude de glycoprotéines différentes, de préférence 2 à 20, telles que 4 à 10 glycoprotéines, lesdites glycoprotéines différant par les composants polysaccharides et/ou par les protéines porteuses.

7. Procédé selon l'une quelconque des revendications 1 à 6, où ladite étape (a) comprend la préparation d'un matériau de référence (étapes a1 à a3 et éventuellement a4 à a5) et l'étalonnage d'un système LC-MS avec ledit matériau de référence (étape a6) :
(a1) la détermination d'identité de ladite glycoprotéine ;
(a2) la détermination d'une teneur totale en polysaccharides (PS) de ladite glycoprotéine dans ledit matériau de référence ;
(a3) la détermination d'une teneur en PS libre dans ledit matériau de référence ;
(a4) éventuellement la détermination du degré de modification, en particulier d'O-acétylation, de ladite glycoprotéine dans ledit matériau de référence ;
(a5) éventuellement la détermination de la pureté de ladite glycoprotéine dans ledit matériau de référence ;
pour ainsi obtenir un matériau de référence comprenant le composant polysaccharide d'une glycoprotéine ; suivie de
(a6) la mesure d'aliquotes dudit matériau de référence au moyen d'un système LC-MS,
pour ainsi établir ladite courbe d'étalonnage.

8. Procédé selon la revendication 7, où
• à l'étape (a1), l'identité de ladite glycoprotéine est déterminée par électrophorèse à transfert Western ou par MS ; et/ou
• à l'étape (a2), la teneur totale en PS est déterminée par IC-PAD après hydrolyse ; et/ou
• à l'étape (a3), la teneur en PS libre est déterminée par IC-PAD après hydrolyse et séparation de PS lié et non lié ; et/ou
• à l'étape (a4), le degré de modification, en particulier d'O-acétylation, est déterminé par chromatographie ionique IC-CD après libération de groupes modificateurs, en particulier la libération de groupes O-acétyle par hydrolyse ; et/ou
• à l'étape (a5), la pureté de la glycoprotéine est déterminée au moyen de RP-HPLC et/ou SEC ; et/ou
• à l'étape (a6), la courbe d'étalonnage est établie par séparation des aliquotes via LC, et soumission de l'éluat de LC à une fragmentation dans la source à l'intérieur du détecteur MS par ajustement de la tension d'ionisation.

9. Procédé selon la revendication 7 ou 8, où ladite étape (b) comprend :
(b1) la fourniture d'un échantillon ; et
(b2) la mesure de l'échantillon à l'aide des mêmes paramètres qu'à l'étape (a6) avec le même système LC-MS.

10. Procédé selon la revendication 9, où ladite mesure (b2) comprend la détermination d'identité de l'échantillon et l'un des points suivants :
• la détermination de la teneur en PS de la glycoprotéine ; OU
• la détermination de la teneur en PS et de la teneur en PS acétylé de la glycoprotéine ; OU
• la détermination de la teneur en PS de la glycoprotéine et la détermination de la pureté d'échantillon ; OU
• la détermination de la teneur en PS et de la teneur en PS acétylé de la glycoprotéine et la détermination de la pureté d'échantillon ; OU
• la détermination de la teneur en PS de la glycoprotéine et la détermination de la teneur en PS libre ; OU
• la détermination de la teneur en PS et de la teneur en PS acétylé de la glycoprotéine et la détermination de la teneur en PS libre ; OU
• la détermination de la teneur en PS et de la teneur en PS acétylé de la glycoprotéine et la détermination de la teneur en PS libre et de la teneur en PS acétylé libre :
• la détermination de la teneur en PS de la glycoprotéine et la détermination de la teneur en PS libre et de la pureté de l'échantillon ; OU
• la détermination de la teneur en PS et de la teneur en PS acétylé de la glycoprotéine et la détermination de la teneur en PS libre et de la pureté de l'échantillon ; OU
• la détermination de la teneur en PS et de la teneur en PS acétylé de la glycoprotéine et la détermination de la teneur en PS libre et de la teneur en PS acétylé libre et de la pureté de l'échantillon.

11. Procédé selon l'une quelconque des revendications 1 à 10, où ladite étape (c) comprend :
(c1) l'identification de pics caractéristiques pour chaque PS dans l'échantillon ; et
(c2) la comparaison de l'ASC pour un tel pic avec la courbe d'étalonnage.

12. Utilisation d'un système de chromatographie liquide - spectrométrie de masse (« système LC-MS ») avec fragmentation dans la source de l'éluat obtenu à partir de la chromatographie liquide pour analyser un composant polysaccharide d'une glycoprotéine dans un échantillon, dans laquelle ladite glycoprotéine comprend une protéine porteuse et un ou plusieurs polysaccharides liés de manière covalente à ladite protéine porteuse, et
par laquelle ladite analyse comprend :
• l'injection de glycoprotéines - ou de glycopeptides obtenus à partir de celles-ci - dans le système LC-MS et leur soumission à une fragmentation dans la source dans le spectromètre de masse,
• l'établissement d'une courbe d'étalonnage dudit composant polysaccharide au moyen du système LC-MS,
• l'identification dudit composant polysaccharide, et
• la quantification absolue dudit composant polysaccharide.

13. Utilisation selon la revendication 12, dans laquelle la glycoprotéine n'est soumise ni à (i) une digestion enzymatique avec une enzyme qui élimine le composant polysaccharide de la protéine porteuse, ni à (ii) une réaction chimique, dans chaque cas avant l'introduction de la glycoprotéine dans ledit système LC-MS.

14. Utilisation selon l'une quelconque des revendications 12 et 13, où le système LC-MS comprend en outre une valve de dérivation devant le détecteur MS.

15. Utilisation selon l'une quelconque des revendications 12 à 14, où ladite protéine porteuse est sélectionnée dans le groupe constitué d'exotoxine A détoxifiée de *P. aeruginosa* (EPA), flagelline d'E. *coli* (FliC), CRM197, protéine de liaison au maltose (MBP), anatoxine diphtérique, anatoxine tétanique, hémolysine A détoxifiée de *S*. *aureus,* facteur d'agglutination A, facteur d'agglutination B, entérotoxine thermolabile *d'E. coli,* variants détoxifiés d'entérotoxine thermolabile *d'E. coli,* sous-unité B de la toxine cholérique (CTB), toxine cholérique, variants détoxifiés de toxine cholérique, protéine Sat d'*E*. *coli,* domaine passager de la toxine cholérique, pneumolysine de *Streptococcus pneumoniae,* hémocyanine de patelle (KLH), PCrV de *P. aeruginosa,* protéine de membrane externe de *Neisseria meningitidis* (OMPC), et protéine D de *Haemophilus influenza* non typable ; de préférence exotoxine A détoxifiée de *Pseudomonas aeruginosa* et/ou
lesdits polysaccharides comprennent de 1 à 100, éventuellement de 5 à 20 motifs répétés, lesdits motifs répétés comprenant des monosaccharides non modifiés et/ou des monosaccharides modifiés.

16. Utilisation selon l'une quelconque des revendications 12 à 15, où ledit échantillon comprend en outre
• une matrice aqueuse, ladite matrice comprenant éventuellement un ou plusieurs tampons, sels inorganiques, alcools de sucre, et tensioactifs non ioniques ;
• éventuellement la protéine porteuse exempte de polysaccharides ;
• éventuellement des polysaccharides non liés à la protéine porteuse ; et
• éventuellement des protéines non apparentées.

17. Utilisation selon l'une quelconque des revendications 12 à 16,
• pour la commande en cours de processus dans la production de glycoconjugués ;
• pour la commande de libération de glycoconjugués produits ;
• pour la commande de stabilité de glycoconjugués stockés ; et/ou
• pour l'optimisation de processus dans la production de glycoconjugués.
